# EUROPÄISCHE PATENTSCHRIFT

(11) **EP 3 459 815 B1**
(45) Veröffentlichungstag und Bekanntmachung des Hinweises auf die Patenterteilung: **18.10.2023**
(21) Anmeldenummer: 18196291.1
(22) Anmeldetag: 24.09.2018
(51) Int. Cl.: B62B 3/14, B62B 3/02

(54) **ROLLWAGEN**
TROLLEY
CHARIOT

(30) Priorität: 25.09.2017 DE 202017105798 U
(43) Veröffentlichungstag der Anmeldung: 27.03.2019
(73) Patentinhaber: Thielen, Rainer, 47608 Geldern-Lüllingen (DE)
(72) Erfinder: Thielen, Rainer, 47608 Geldern-Lüllingen (DE)
(74) Vertreter: Dr. Stark & Partner Patentanwälte mbB

(56) Entgegenhaltungen:
- EP-A1- 3 109 130
- WO-A1-98/11526
- AT-B- 407 583
- DE-U1-202007 015 159
- US-A1- 2007 158 511

## Beschreibung

Die Erfindung betrifft einen Rollwagen, insbesondere zum Transport von Pflanzen und/oder in Behältnissen stehenden Blumen, Schnittblumen oder dergleichen, wobei der Rollwagen unterseitig Rollen und zumindest eine, vorzugsweise viereckige, Transportfläche, vorzugsweise zumindest zwei, in einem vertikalen Abstand übereinander angeordnete, vorzugsweise viereckige, Transportflächen, aufweist und wobei der Rollwagen zumindest zwei im Abstand zueinander angeordnete, vorzugsweise vertikal, ausgerichtete Stangen, die über die oberste Transportfläche oberseitig hinausragen, aufweist.

Aus der AT 407 583 B, aus der US 2007/0158511 A1 und aus der WO 98/11526 A1 sind Einkaufswagen bekannt. Die EP 3 109 130 A1 beschreibt einen Trolley.

Aus der Praxis sind Rollwagen bekannt, mittels derer beispielsweise Pflanzen oder in Behältnissen stehende Blumen, wie Schnittblumen von einem Betrieb zur Verkaufsstätte transportiert werden. Die Rollwagen dienen in der Verkaufsstätte dabei auch direkt als Verkaufsregal. Insoweit ist eine Auszeichnung erforderlich. Diese Auszeichnung umfasst beispielsweise Informationen zur Art der Pflanze oder den Preis. Bisher werden in der Verkaufsstätte an den Rollwagen Papier- oder Pappzettel angeklebt. Nachteilig ist, dass die Klebewirkung nachlässt, was durch die durch die Pflanzen bedingte feuchte Umgebungsluft begünstigt wird. In diesem Fall lösen sich die Papier- oder Pappzettel und müssen erneut angeklebt werden.

Aufgabe der Erfindung ist es, einen Rollwagen anzugeben, der das Anbringen von Informationen erleichtert.

Diese Aufgabe wird durch die Merkmale von Anspruch 1 gelöst, wobei der Rollwagen zumindest eine Werbefläche aufweist, die so mittels zumindest einer Einrichtung an dem Rollwagen befestigt ist, dass die Werbefläche aus einer, vorzugsweise horizontal ausgerichteten, Parkposition in eine vertikale Leseposition verlagerbar und in der Leseposition fixierbar ist. Auf der Werbefläche werden die entsprechenden Informationen aufgedruckt oder aufgeschrieben. Ferner kann die gewünschte graphische Gestaltung ausgewählt werden. In der Parkposition ist die Werbefläche horizontal ausgerichtet und befindet sich beispielsweise innerhalb des von dem Rollenwagen umfassten Raums. Diese Position bietet sich beispielsweise beim Transport des Rollwagens zur Verkaufsstätte an. In der Verkaufsstätte kann die Werbefläche in die Leseposition verlagert werden. Dies erfolgt durch eine Änderung der Ausrichtung um 90°. Dann ist die Werbefläche vertikal ausgerichtet, so dass die auf der Werbefläche enthaltenen Informationen von der Seite des Rollwagens aus sichtbar und lesbar sind. Auf der Werbefläche können beispielsweise Informationen zu den in dem Rollwagen transportierten Waren oder deren Preise hinterlegt sein.

Zumindest eine Werbefläche kann in ihrer Leseposition zumindest teilweise, vorzugsweise vollständig, über das obere Ende der Stangen oberseitig hinausragen.

Zumindest eine Werbefläche kann in ihrer Parkposition vollständig unterhalb des oberen Endes der Stangen angeordnet sein. Diese Ausgestaltung erlaubt, dass während des Transports in einem LKW zwei Rollwagen derart übereinander gestapelt werden können, dass der obere Rollwagen auf die oberen Enden der Stangen des unteren Rollwagens abgesetzt wird.

Die Breite zumindest einer Werbefläche kann etwas geringer sein als der Abstand zwischen den aufeinander zu weisenden Seiten der zwei benachbarten Stangen, an denen die Werbefläche in ihrer Leseposition fixiert ist.

Alternativ kann die Breite zumindest einer Werbefläche größer sein als der Abstand zwischen den aufeinander zu weisenden Seiten der zwei benachbarten Stangen, an denen die Werbefläche in ihrer Leseposition fixiert ist. Vorzugsweise ist die Breite der Webefläche nicht größer als der Abstand der beiden Außenseiten der benachbarten Stangen, da anderenfalls die Werbefläche seitlich übersteht.

Zumindest eine Werbefläche kann als Platte, wie beispielsweise als Holz-, Kunststoff- oder Metallplatte, ausgebildet sein.

Wenigstens ein Ende zumindest einer Werbefläche kann unter Bildung eines Schenkels abgewinkelt ausgebildet sein. Sofern beide Enden der Werbefläche abgewinkelt sind, hat die Werbefläche in ihrer Leseposition von oben gesehen eine u-förmige Ausgestaltung. Sofern die Breite der betreffenden Werbefläche etwas geringer als der Abstand zwischen den aufeinander zu weisenden Seiten der zwei benachbarten Stangen ist, kann die Werbefläche zwischen den beiden Stangen beispielsweise durch Klemmung fixiert werden. Sofern die Breite der betreffenden Werbefläche etwas größer als der Abstand zwischen den voneinander weg weisenden Außenseiten der zwei benachbarten Stangen ist, kann die Werbefläche mit ihren beiden Schenkeln die beiden Stangen außenseitig klemmend umgreifen.

Wenigstens eine Einrichtung kann zumindest eine Erhebung sowie eine in der Leseposition mit der Erhebung korrespondierende Ausnehmung umfassen. Dies erlaubt eine Fixierung der Werbefläche durch Klemmung in ihrer Park- und auch in ihrer Leseposition. Die Erhebung kann an der Stange in dem Bereich, der in der Leseposition mit dem Schenkel der Werbefläche zusammenwirkt, und die korrespondierende Ausnehmung in dem Schenkel vorgesehen sein. Selbstverständlich ist auch eine umgekehrte Anordnung denkbar.

Wenigstens eine Einrichtung kann magnetisch wirkend ausgebildet sein. Bei einer solchen Ausgestaltung weist die Einrichtung zumindest einen Magneten auf, der an der Werbefläche bzw. an der Stange befestigt ist. Zumindest in dem mit dem Magneten zusammenwirkenden Bereich ist die Stange bzw. die Werbefläche aus einem ferromagnetischen Bereich oder weist eine ferromagnetische Beschichtung auf.

Wenigstens eine Einrichtung weist ein eine Schwenkachse bildendes Scharnier auf, um das die Werbefläche zwischen ihrer Leseposition und ihrer Parkposition verschwenkbar ist.

Wenigstens eine Einrichtung kann einen Anschlag aufweisen, der den Verschwenkweg in Richtung der Parkposition begrenzt und auf dem die Werbefläche in ihrer Parkposition aufliegt.

Wenigstens eine Einrichtung weist einen hülsenartig ausgebildeten Rohrabschnitt zum Aufstecken auf das freie obere Ende einer Stange sowie einen über das Scharnier verschwenkbar mit dem Rohrabschnitt verbundenen Halteabschnitt auf.

Der Halteabschnitt zumindest einer Einrichtung kann einen Schlitz zur Aufnahme eines Teilbereichs der Werbefläche aufweisen. Die Werbefläche muss lediglich von oben oder von der Seite in den Schlitz eingeführt werden.

Der Schlitz des Halteabschnittes zumindest einer Einrichtung kann parallel zur Schwenkachse des Scharniers ausgerichtet sein. Bei einer solchen Ausgestaltung kann die Werbefläche als Platte ausgebildet sein. Der Schlitz kann aus einem u-förmig ausgebildeten Bereich bestehen, in den die Werbefläche eingeschoben wird. Selbstverständlich kann der Schlitz des Halteabschnittes zumindest einer Einrichtung auch senkrecht zur Schwenkachse des Scharniers ausgerichtet sein. Dann greift die Werbefläche mit einem Schenkel in den betreffenden Schlitz ein.

Der Rohrabschnitt wenigstens einer Einrichtung kann wenigstens einen innenseitigen Vorsprung zur Begrenzung der Aufsteckbewegung auf das freie Ende einer Stange aufweisen.

Zumindest einer Einrichtung kann ein Sicherungselement zugeordnet sein, das ein unbeabsichtigtes Verschwenken der Werbefläche aus ihrer Leseposition in ihre Parkposition verhindert.

Zumindest ein Sicherungselement kann als Sicherungslasche ausgebildet sein, die entweder an dem Rohrabschnitt angeordnet ist und mit einem an dem Halteabschnitt vorgesehenen Vorsprung zusammenwirkt, oder die an dem Halteabschnitt angeordnet ist und mit einem an dem Rohrabschnitt vorgesehenen Vorsprung zusammenwirkt.

Wenigstens eine Einrichtung kann aus Kunststoff bestehen und vorzugsweise einteilig ausgebildet sein. Bei einer solchen Ausgestaltung ist das Scharnier als Folienscharnier ausgebildet.

Jede Transportfläche kann viereckig ausgebildet sein, und im Bereich jeder der vier Ecken kann eine Stange vorgesehen sein.

Zumindest eine Transportfläche kann lösbar und, vorzugsweise höhenverstellbar, an den Stangen befestigbar sein.

Im Folgenden werden in den Zeichnungen dargestellte Ausführungsbeispiele der Erfindung erläutert. Es zeigen:
- Fig. 1 +2: ein erstes Ausführungsbeispiel der Einrichtung eines erfindungsgemäßen Rollwagens,
- Fig. 3: einen schematischen Schnitt durch die auf ein oberes Ende einer Stange aufgesteckte Einrichtung nach den Fig. 1 und 2,
- Fig. 4: eine Werbefläche mit zwei abgewinkelten Schenkeln, wobei auf der Innenseite jedes Schenkels jeweils eine magnetisch wirkende Einrichtung umfassend drei Magnete vorgesehen ist,
- Fig. 5: eine Werbefläche mit zwei abgewinkelten Schenkeln, wobei auf der Außenseite jedes Schenkels jeweils eine magnetisch wirkende Einrichtung umfassend drei Magnete vorgesehen ist,
- Fig. 6: eine Werbefläche gemäß dem Gegenstand nach Fig. 5 in ihrer Leseposition und
- Fig. 7: eine Werbefläche gemäß dem Gegenstand nach Fig. 5 in ihrer Parkposition.

In allen Figuren werden für gleiche bzw. gleichartige Bauteile übereinstimmende Bezugszeichen verwendet.

Der erfindungsgemäße Rollwagen weist unterseitig nicht dargestellte Rollen sowie mehrere, in einem vertikalen Abstand übereinander angeordnete, viereckige Transportflächen auf. Jede Transportfläche ist viereckig ausgebildet. Im Bereich jeder der vier Ecken ist jeweils eine Stange 1 vorgesehen. Die Transportflächen sind üblicherweise lösbar und höhenverstellbar an den Stangen 1 befestigt. Die vier Stangen 1 ragen über die oberste Transportfläche oberseitig hinaus.

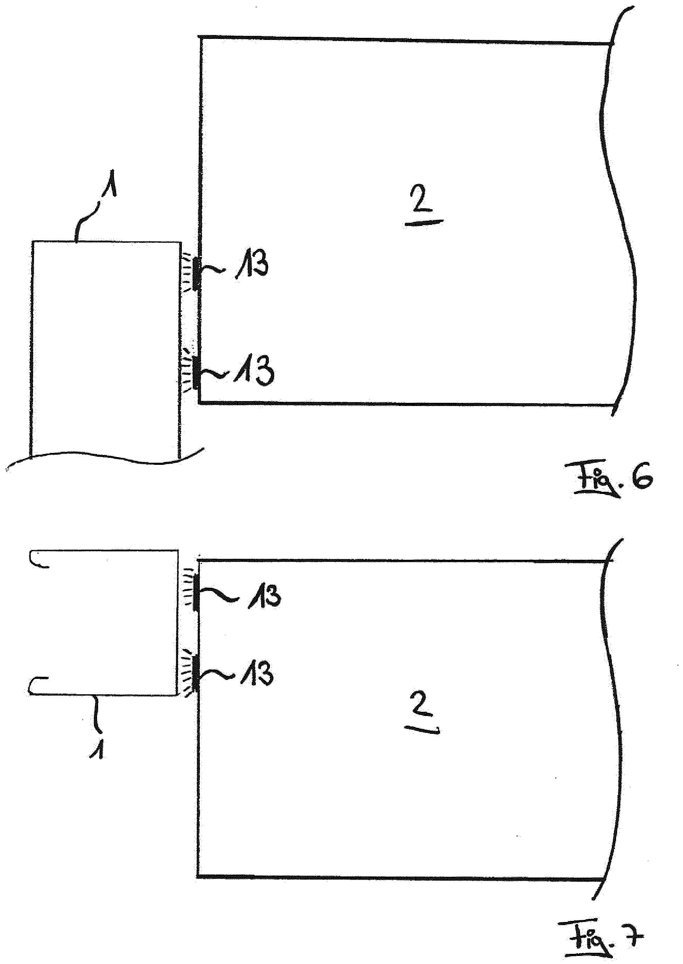

Ferner weist der Rollwagen eine Werbefläche 2 auf, die so mittels zweier Einrichtungen 3 an den Stangen 1 des Rollwagens befestigt ist, dass die Werbefläche 2 aus einer, vorzugsweise horizontal ausgerichteten, Parkposition, sowie sie in Fig. 7 dargestellt ist, in eine vertikale Leseposition, sowie sie in Fig. 6 dargestellt ist, verlagerbar und in der Leseposition fixierbar ist. Die Werbefläche 2 ragt in ihrer Leseposition teilweise über das obere Ende der Stangen 1 oberseitig hinaus.

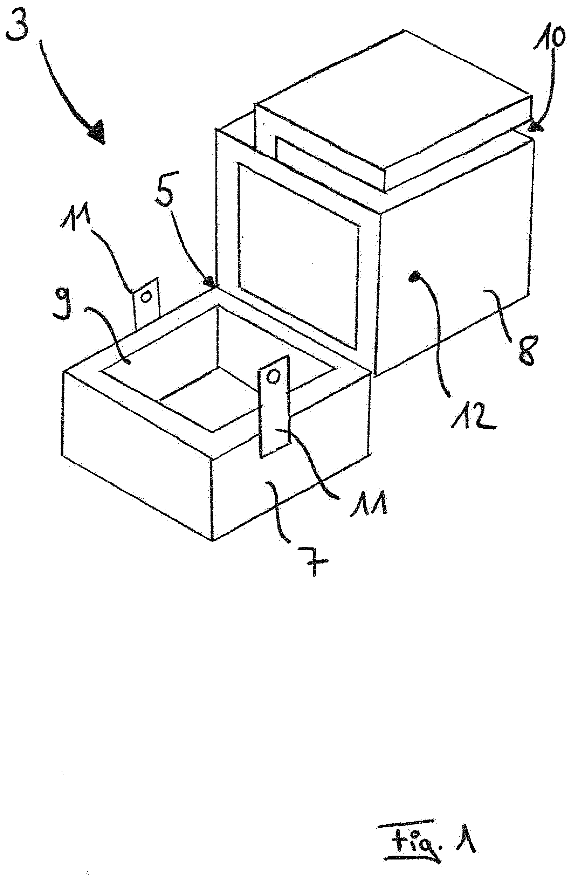

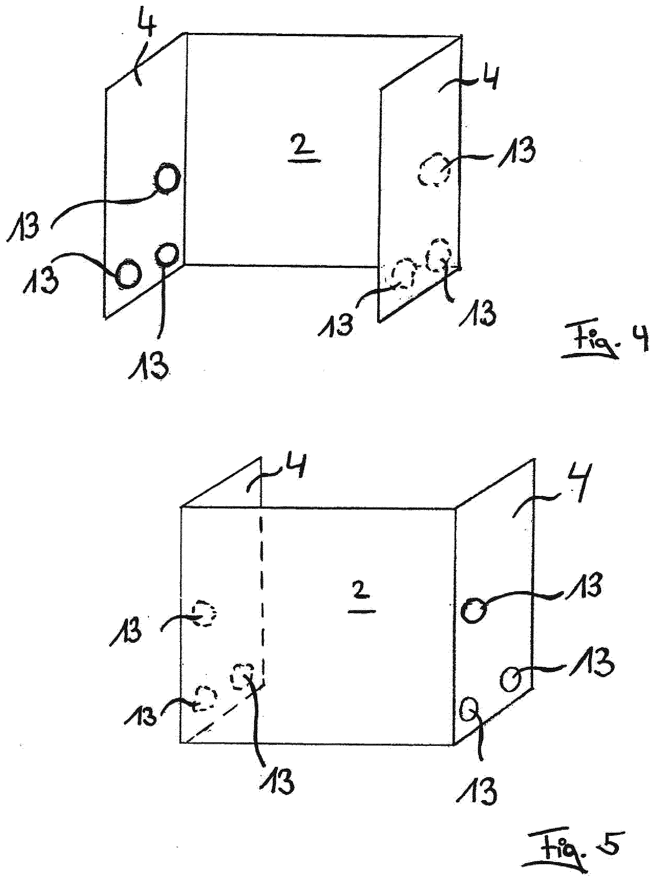

Bei den Ausführungsbeispielen nach den Fig. 1 bis 3 ist die Werbefläche 2 als Platte ausgebildet, während bei den Ausführungsbeispielen nach den Fig. 4 bis 7 die beiden Enden der Werbefläche 2 unter Bildung jeweils eines Schenkels 4 abgewinkelt ausgebildet sind.

Bei den Ausführungsbeispielen nach den Fig. 1 bis 3 ist die Breite der Werbefläche 2 größer als der Abstand zwischen den aufeinander zu weisenden Seiten der zwei benachbarten Stangen 1, an denen die Werbefläche 2 in ihrer Leseposition fixiert ist. Am breitetesten ist der Abstand bei dem Ausführungsbeispiel nach Fig. 4, da hier die Werbefläche 2 mit ihren beiden Schenkeln 4 die beiden Stangen 1 außenseitig umgreift.

Die Fig. 1 bis 3 zeigen ein Ausführungsbeispiel, bei dem jede Einrichtung 3 ein eine Schwenkachse bildendes Scharnier 5 aufweist, um das die Werbefläche 2 zwischen ihrer Leseposition und ihrer Parkposition verschwenkbar ist. Ferner ist ein außenseitig angebrachter Anschlag 6 vorgesehen, der den Verschwenkweg in Richtung der Parkposition begrenzt und auf dem die Werbefläche 2 in ihrer Parkposition aufliegt.

Jede Einrichtung 3 weist einen hülsenartig ausgebildeten Rohrabschnitt 7 sowie einen über das Scharnier 5 verschwenkbar mit dem Rohrabschnitt 7 verbundenen Halteabschnitt 8 auf. Der Rohrabschnitt 7 wird auf das freie obere Ende einer Stange 1 aufgesteckt. Ein umlaufender innenseitiger Vorsprung 9 begrenzt die Aufsteckbewegung auf das freie Ende einer Stange 1.

An jedem Halteabschnitt 8, der in dem dargestellten Ausführungsbeispiel die gleiche Form wie der Rohrabschnitt 7 aufweist, ist außenseitig ein Schlitz 10 zur Aufnahme eines Teilbereichs der Werbefläche 1 vorgesehen. Der Schlitz 10 ist in den dargestellten Ausführungsbeispielen parallel zur Schwenkachse des Scharniers 5 ausgerichtet und in einem Abstand zur angrenzenden Außenkante der Stange 1 angeordnet.

Jeder Einrichtung 3 ist ein Sicherungselement zugeordnet, das ein unbeabsichtigtes Verschwenken der Werbefläche 2 aus ihrer Leseposition in ihre Parkposition verhindert. Das Sicherungselement ist als Sicherungslasche 11 ausgebildet, die an dem Rohrabschnitt 7 angeordnet ist und in der Leseposition der Werbefläche 2 mit einem an dem Halteabschnitt 8 vorgesehenen Vorsprung 12 zusammenwirkt.

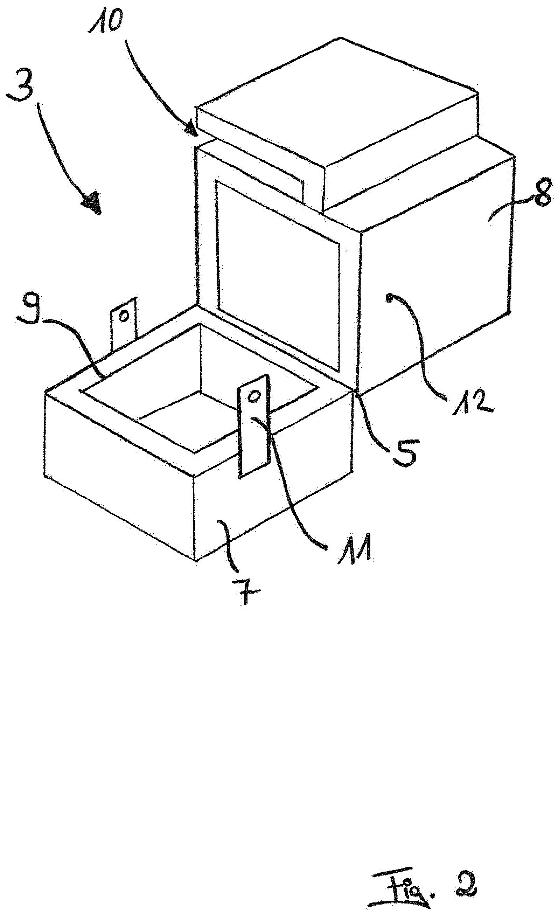

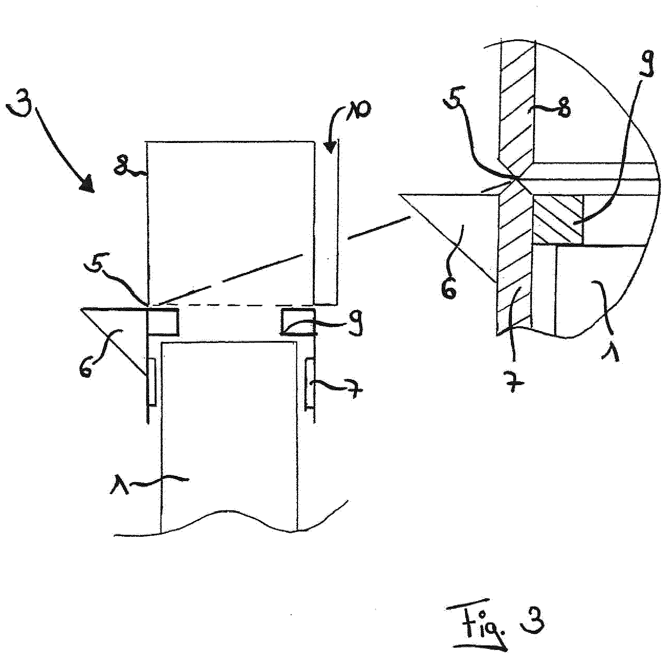

Die in den Fig. 1 bis 3 dargestellte Einrichtung 3 kann aus Kunststoff bestehen und einteilig ausgebildet sein. Wie der vergrößerte Teilausschnitt in Fig. 3 zeigt, ist das Scharnier 5 als Folienscharnier ausgebildet. Die Fig. 1 und 2 zeigen die beiden Einrichtungen 3, die an den beiden gegenüberliegenden Enden der Werbefläche 2 angeordnet sind.

Bei den Ausführungsbeispielen nach den Fig. 4 bis 7 ist die Einrichtung 2 magnetisch wirkend ausgebildet. So umfasst jede Einrichtung 2 drei Magnete 13, die bei der Ausgestaltung nach Fig. 4 auf der Innenseite jedes Schenkels 4 angeordnet sind. Insoweit ist die Werbefläche 2 an der jeweiligen Außenseite jeder der beiden Stangen 1 befestigt. Bei der Ausgestaltung nach den Fig. 5 bis 7 sind die drei Magnete 13 auf der Außenseite jedes Schenkels 4 angeordnet. Damit wirken die drei Magnete 13 mit der Innenseite einer Stange 1 zusammen.

Bei dem Ausführungsbeispiel nach den Fig. 5 bis 7 ist die Breite der Werbefläche 2 etwas geringer als der Abstand zwischen den aufeinander zu weisenden Seiten der zwei benachbarten Stangen 1, an denen die Werbefläche 2 in ihrer Leseposition fixiert ist.

## Patentansprüche

1. Rollwagen, insbesondere zum Transport von Pflanzen und/oder in Behältnissen stehenden Blumen, Schnittblumen oder dergleichen, wobei der Rollwagen unterseitig Rollen und zumindest eine, vorzugsweise viereckige, Transportfläche, vorzugsweise zumindest zwei, in einem vertikalen Abstand übereinander angeordnete, vorzugsweise viereckige, Transportflächen, aufweist und wobei der Rollwagen zumindest zwei im Abstand zueinander angeordnete, vorzugsweise vertikal, ausgerichtete Stangen (1), die über die oberste Transportfläche oberseitig hinausragen, aufweist, wobei der Rollwagen zumindest eine Werbefläche (2) aufweist, die so mittels zumindest einer Einrichtung (3) an dem Rollwagen befestigt ist, dass die Werbefläche (2) aus einer, vorzugsweise horizontal ausgerichteten, Parkposition in eine vertikale Leseposition verlagerbar und in der Leseposition fixierbar ist, dass wenigstens eine Einrichtung (3) ein eine Schwenkachse bildendes Scharnier (5) aufweist, um das die Werbefläche (2) zwischen ihrer Leseposition und ihrer Parkposition verschwenkbar ist,
**dadurch gekennzeichnet, dass** wenigstens eine Einrichtung (3) einen hülsenartig ausgebildeten Rohrabschnitt (7) zum Aufstecken auf das freie obere Ende einer Stange (1) sowie einen über das Scharnier (5) verschwenkbar mit dem Rohrabschnitt (7) verbundenen Halteabschnitt (8) aufweist.

2. Rollwagen nach dem vorhergehenden Anspruch, **dadurch gekennzeichnet, dass** zumindest eine Werbefläche (2) in ihrer Leseposition zumindest teilweise, vorzugsweise vollständig, über das obere Ende der Stangen (1) oberseitig hinausragt.

3. Rollwagen nach einem der vorhergehenden Ansprüche, **dadurch gekennzeichnet, dass** zumindest eine Werbefläche (2) in ihrer Parkposition vollständig unterhalb des oberen Endes der Stangen (1) angeordnet ist.

4. Rollwagen nach einem der vorhergehenden Ansprüche, **dadurch gekennzeichnet, dass** die Breite zumindest einer Werbefläche (2) etwas geringer ist als der Abstand zwischen den aufeinander zu weisenden Seiten der zwei benachbarten Stangen (1), an denen die Werbefläche (2) in ihrer Leseposition fixiert ist.

5. Rollwagen nach einem der vorhergehenden Ansprüche, **dadurch gekennzeichnet, dass** die Breite zumindest einer Werbefläche (2) größer ist als der Abstand zwischen den aufeinander zu weisenden Seiten der zwei benachbarten Stangen (1), an denen die Werbefläche (2) in ihrer Leseposition fixiert ist.

6. Rollwagen nach einem der vorhergehenden Ansprüche, **dadurch gekennzeichnet, dass** zumindest eine Werbefläche (2) als Platte ausgebildet ist.

7. Rollwagen nach einem der vorhergehenden Ansprüche, **dadurch gekennzeichnet, dass** wenigstens ein Ende zumindest einer Werbefläche (2) unter Bildung eines Schenkels (4) abgewinkelt ausgebildet ist.

8. Rollwagen nach dem vorhergehenden Anspruch, **dadurch gekennzeichnet, dass** wenigstens eine Einrichtung (3) zumindest eine Erhebung sowie eine in der Leseposition mit der Erhebung korrespondierende Ausnehmung umfasst.

9. Rollwagen nach einem der vorhergehenden Ansprüche, **dadurch gekennzeichnet, dass** wenigstens eine Einrichtung (3) magnetisch wirkend ausgebildet ist.

10. Rollwagen nach einem der vorhergehenden Ansprüche, **dadurch gekennzeichnet, dass** wenigstens eine Einrichtung (3) einen Anschlag (6) aufweist, der den Verschwenkweg in Richtung der Parkposition begrenzt und auf dem die Werbefläche (2) in ihrer Parkposition aufliegt.

11. Rollwagen nach einem der vorhergehenden Ansprüche, **dadurch gekennzeichnet, dass** der Halteabschnitt (8) zumindest einer Einrichtung (3) einen Schlitz (10) zur Aufnahme eines Teilbereichs der Werbefläche (2) aufweist.

12. Rollwagen nach dem vorhergehenden Anspruch, **dadurch gekennzeichnet, dass** der Schlitz (10) des Halteabschnittes (8) zumindest einer Einrichtung (3) parallel zur Schwenkachse des Scharniers (5) ausgerichtet ist.

13. Rollwagen nach einem der Ansprüche 1 bis 12, **dadurch gekennzeichnet, dass** der Rohrabschnitt (7) wenigstens einer Einrichtung (3) wenigstens einen innenseitigen Vorsprung (9) zur Begrenzung der Aufsteckbewegung auf das freie Ende einer Stange (1) aufweist.

14. Rollwagen nach einem der Ansprüche 1 bis 13, **dadurch gekennzeichnet, dass** zumindest einer Einrichtung (3) ein Sicherungselement zugeordnet ist, das ein unbeabsichtigtes Verschwenken der Werbefläche (2) aus ihrer Leseposition in ihre Parkposition verhindert.

15. Rollwagen nach dem vorhergehenden Anspruch, **dadurch gekennzeichnet, dass** zumindest ein Sicherungselement als Sicherungslasche (11) ausgebildet ist, die entweder an dem Rohrabschnitt (7) angeordnet ist und mit einem an dem Halteabschnitt (8) vorgesehenen Vorsprung (12) zusammenwirkt, oder die an dem Halteabschnitt (8) angeordnet ist und mit einem an dem Rohrabschnitt (7) vorgesehenen Vorsprung (12) zusammenwirkt.

16. Rollwagen nach einem der Ansprüche 1 bis 15, **dadurch gekennzeichnet, dass** wenigstens eine Einrichtung (3) aus Kunststoff besteht und vorzugsweise einteilig ausgebildet ist.

17. Rollwagen nach einem der vorhergehenden Ansprüche, **dadurch gekennzeichnet, dass** jede Transportfläche viereckig ausgebildet ist und dass im Bereich jeder der vier Ecken eine Stange (1) vorgesehen ist.

18. Rollwagen nach einem der vorhergehenden Ansprüche, **dadurch gekennzeichnet, dass** zumindest eine Transportfläche lösbar und, vorzugsweise höhenverstellbar, an den Stangen (1) befestigbar ist.

## Claims

1. Trolley, in particular for the transport of plants and/or flowers standing in containers, cut flowers or the like, wherein the trolley comprises rollers on the under side and at least one, preferably rectangular, transport surface and preferably at least two, preferably rectangular, transport surfaces arranged at a vertical distance interval above one another, and wherein the trolley comprises at least two preferably vertical rods (1), arranged at a distance interval from one another, which project on the upper side over the topmost transport surface, wherein the trolley comprises at least one advertising display surface (2), which is secured to the trolley by means of at least one device (3) in such a way that the advertising display surface (2) can be moved out of a parking position, preferably aligned horizontally, into a vertical reading position and can be fixed in the reading position, and at least one device (3) comprises a hinge (5), forming a pivot axis about which the advertising display surface (2) can be pivoted between its reading position and its parking position, **characterised in that** at least one device (3) comprises a tubular section (7), configured in the form of a sleeve, for placing onto the free upper end of a rod (1), as well as a holding section (8) connected to the tubular section (7) such as to be able to pivot by means of the hinge (5).

2. Trolley according to the preceding claim, **characterised in that** at least one advertising display surface (2), in its reading position, projects, at least partially and preferably entirely, over the upper end of the rods (1).

3. Trolley according to any one of the preceding claims, **characterised in that** at least one advertising display surface (2), in its parking position, is arranged entirely beneath the upper end of the rods (1).

4. Trolley according to any one of the preceding claims, **characterised in that** the width of at least one advertising display surface (2) is somewhat less than the distance interval between the sides facing one another of the two adjacent rods (1), to which the advertising display surface (2) is fixed in its reading position.

5. Trolley according to any one of the preceding claims, **characterised in that** the width of at least one advertising display surface (2) is greater than the distance interval between the sides facing one another of the two adjacent rods (1), to which the advertising display surface (2) is fixed in its reading position.

6. Trolley according to any one of the preceding claims, **characterised in that** at least one advertising display surface (2) is configured as a plate.

7. Trolley according to any one of the preceding claims, **characterised in that** at least one end of at least one advertising display surface (2) is configured as being angled, with the formation of a limb (4).

8. Trolley according to any one of the preceding claims, **characterised in that** at least one device (3) comprises at least one elevation and a cut-out opening in the reading position which corresponds to the elevation.

9. Trolley according to any one of the preceding claims, **characterised in that** at least one device (3) is configured as having a magnetic effect.

10. Trolley according to any one of the preceding claims, **characterised in that** at least one device (3) comprises a stop (6), which delimits the pivot path in the direction of the parking position, and with which the advertising display surface (2) is in contact in its parking position.

11. Trolley according to any one of the preceding claims, **characterised in that** the holding section (8) of at least one device (3) comprises a slot (10) to accommodate a part region of the advertising display surface (2).

12. Trolley according to any one of the preceding claims, **characterised in that** the slot (10) of the holding section (8) of at least one device (3) is aligned parallel to the pivot axis of the hinge (5).

13. Trolley according to any one of claims 1 to 12, **characterised in that** the tubular section (7) of at least one device (3) comprises at least one inner side projection (9) in order to delimit the movement of placement onto the free end of a rod (1).

14. Trolley according to any one of claims 1 to 13, **characterised in that** a securing element is assigned to at least one device (3), which prevents an unintentional pivoting of the advertising display surface (2) out of its reading position into its parking position.

15. Trolley according to the preceding claim, **characterised in that** at least one securing element is configured as a securing tab (11), which is either arranged at the tubular section (7) and interacts with a projection (12) provided on the holding section (8), or is arranged at the holding section (8) and interacts with a projection (12) provided at the tubular section (7).

16. Trolley according to any one of claims 1 to 15, **characterised in that** at least one device (3) is made of plastic and is preferably configured as being of one piece.

17. Trolley according to any one of the preceding claims, **characterised in that** each transport surface is configured as rectangular, and that a rod (1) is provided in the region of each of the four corners.

18. Trolley according to any one of the preceding claims, **characterised in that** at least one transport surface can be secured to the rods (1) in a detachable manner, and preferably height adjustable.

## Revendications

1. Chariot roulant notamment destiné au transport de plantes et/ou de fleurs, fleurs coupées ou objets similaires se dressant dans des conteneurs, ledit chariot roulant étant muni de roulettes à la face inférieure, et d'au moins une surface de transport préférentiellement rectangulaire, de préférence d'au moins deux surfaces de transport préférentiellement rectangulaires, agencées en superposition à distance verticale, et ledit chariot roulant étant pourvu d'au moins deux tiges (1) disposées à distance l'une de l'autre, préférentiellement orientées dans le sens vertical et faisant saillie au-delà de la face supérieure de la surface de transport située au plus haut, ledit chariot roulant étant doté d'au moins une surface publicitaire (2) fixée audit chariot roulant, au moyen d'au moins un dispositif (3), de façon telle que ladite surface publicitaire (2) puisse être déplacée vers un emplacement vertical de lecture à partir d'un emplacement de remisage préférentiellement orienté dans le sens horizontal, et puisse être bloquée à demeure audit emplacement de lecture, au moins un dispositif (3) comportant une charnière (5) qui forme un axe de pivotement et autour de laquelle ladite surface publicitaire (2) peut pivoter entre son emplacement de lecture et son emplacement de remisage,
**caractérisé par le fait qu'**au moins un dispositif (3) comprend un tronçon tubulaire (7) réalisé à la manière d'une douille, en vue de l'emboîtement sur l'extrémité supérieure libre d'une tige (1), ainsi qu'un tronçon de retenue (8) relié audit tronçon tubulaire (7) avec faculté de pivotement par l'intermédiaire de la charnière (5).

2. Chariot roulant selon la revendication précédente, **caractérisé par le fait qu'**au moins une surface publicitaire (2) fait au moins partiellement, de préférence intégralement saillie à la face supérieure, à son emplacement de lecture, au-delà de l'extrémité supérieure des tiges (1).

3. Chariot roulant selon l'une des revendications précédentes, **caractérisé par le fait qu'**au moins une surface publicitaire (2) est intégralement disposée au-dessous de l'extrémité supérieure des tiges (1) à son emplacement de remisage.

4. Chariot roulant selon l'une des revendications précédentes, **caractérisé par le fait que** la largeur d'au moins une surface publicitaire (2) est sensiblement moindre que la distance comprise entre les faces, pointant l'une vers l'autre, des deux tiges voisines (1) au niveau desquelles ladite surface publicitaire (2) est bloquée à demeure à son emplacement de lecture.

5. Chariot roulant selon l'une des revendications précédentes, **caractérisé par le fait que** la largeur d'au moins une surface publicitaire (2) est supérieure à la distance comprise entre les faces, pointant l'une vers l'autre, des deux tiges voisines (1) au niveau desquelles ladite surface publicitaire (2) est bloquée à demeure à son emplacement de lecture.

6. Chariot roulant selon l'une des revendications précédentes, **caractérisé par le fait qu'**au moins une surface publicitaire (2) est conçue sous la forme d'une plaque.

7. Chariot roulant selon l'une des revendications précédentes, **caractérisé par le fait qu'**au moins une extrémité d'au moins une surface publicitaire (2) est de réalisation coudée, avec formation d'une aile (4).

8. Chariot roulant selon la revendication précédente, **caractérisé par le fait qu'**au moins un dispositif (3) est nanti d'au moins une protubérance, ainsi que d'un évidement concordant avec ladite protubérance à l'emplacement de lecture.

9. Chariot roulant selon l'une des revendications précédentes, **caractérisé par le fait qu'**au moins un dispositif (3) est conçu pour exercer un effet magnétique.

10. Chariot roulant selon l'une des revendications précédentes, **caractérisé par le fait qu'**au moins un dispositif (3) est muni d'une butée (6) qui limite la course de pivotement dans la direction de l'emplacement de remisage, et sur laquelle la surface publicitaire (2) repose à son emplacement de remisage.

11. Chariot roulant selon l'une des revendications précédentes, **caractérisé par le fait que** le tronçon de retenue (8) d'au moins un dispositif (3) est muni d'une fente (10), en vue de recevoir une région partielle de la surface publicitaire (2).

12. Chariot roulant selon la revendication précédente, **caractérisé par le fait que** la fente (10) du tronçon de retenue (8) d'au moins un dispositif (3) est orientée parallèlement à l'axe de pivotement de la charnière (5).

13. Chariot roulant selon l'une des revendications 1 à 12, **caractérisé par le fait que** le tronçon tubulaire (7) d'au moins un dispositif (3) est doté d'au moins une saillie intérieure (9), en vue de limiter le mouvement d'emboîtement sur l'extrémité libre d'une tige (1).

14. Chariot roulant selon l'une des revendications 1 à 13, **caractérisé par le fait qu'**un élément de sécurité, associé à au moins un dispositif (3), empêche un pivotement involontaire de la surface publicitaire (2) vers son emplacement de remisage à partir de son emplacement de lecture.

15. Chariot roulant selon la revendication précédente, **caractérisé par le fait qu'**au moins un élément de sécurité est conçu sous la forme d'une patte de sécurité (11) qui est implantée sur le tronçon tubulaire (7) et coopère avec une saillie (12) prévue sur le tronçon de retenue (8), ou bien est implantée sur ledit tronçon de retenue (8) et coopère avec une saillie (12) prévue sur ledit tronçon tubulaire (7).

16. Chariot roulant selon l'une des revendications 1 à 15, **caractérisé par le fait qu'**au moins un dispositif (3) consiste en une matière plastique et est, de préférence, réalisé d'une seule pièce.

17. Chariot roulant selon l'une des revendications précédentes, **caractérisé par le fait que** chaque surface de transport est de réalisation rectangulaire ; et **par le fait qu'**une tige (1) est prévue dans la région de chacun des quatre coins.

18. Chariot roulant selon l'une des revendications précédentes, **caractérisé par le fait qu'**au moins une surface de transport peut être fixée aux tiges (1) de manière libérable et, de préférence, avec faculté de réglage en hauteur.
